# EUROPEAN PATENT APPLICATION

(11) **EP 4 372 333 A1**
(43) Date of publication of application: **22.05.2024**
(21) Application number: 23830088.3
(22) Date of filing: 21.06.2023
(51) Int. Cl.: G01J 1/42, G01J 1/04, B23K 26/21

(54) **LASER POWER MEASUREMENT SYSTEM, WELDING SYSTEM, AND TESTING METHOD FOR LASER-WELDED WORKPIECE**

(30) Priority: 01.07.2022 CN 202210769587
(71) Applicant: Contemporary Amperex Technology Co., Limited, Ningde, Fujian 352100 (CN)
(72) Inventor: WANG, Wenchong, Ningde, Fujian 352100 (CN)
(74) Representative: Rowlands, Stuart Michael
(86) International application number: PCT/CN2023/101765
(87) International publication number: WO 2024/001909

(57) **Abstract**

This application relates to a laser power detection system, a welding system, and an inspection method for laser welded workpiece. Laser emitted by a laser device is guided to an oscillating mirror and a power detection apparatus by a light guide portion. This allows the oscillating mirror to output laser for performing laser welding operations on a welding object. This also allows the power detection apparatus to detect, through a photoelectric conversion component, an electrical signal corresponding to the laser emitted by the laser device, and to determine, through a computing component based on the electrical signal and a preset conversion relationship, a laser power corresponding to the laser emitted by the laser device. In embodiments of this application, the power detection apparatus is disposed on an optical conduction path between the laser device and the oscillating mirror, so that the laser power of the laser device can be detected in real time during the operation of the laser welding machine without removing the QBH connector and the oscillating mirror. Therefore, the method for measuring the laser power of the laser device in the embodiments of this application is simple and efficient.

## Description

### CROSS-REFERENCE TO RELATED APPLICATIONS

This application refers to Chinese patent application No. 2022107695877, filed on July 1, 2022 and entitled "LASER POWER DETECTION SYSTEM, WELDING SYSTEM, AND INSPECTION METHOD FOR LASER WELDED WORKPIECE", which is incorporated herein by reference in its entirety.

### TECHNICAL FIELD

This application relates to the field of laser welding technology, and in particular, to a laser power detection system, a welding system, and an inspection method for laser welded workpiece.

### BACKGROUND

With the development of laser welding technology, laser welding technology has been widely used in a variety of industries such as manufacturing, powder metallurgy, automotive industry, electronics industry, and biomedicine. The laser power of the laser device in the laser welding machine is one of the critical parameters in the laser welding process.

In some cases, in measuring the laser power of the laser device in the laser welding machine, it is typically necessary to stop the laser welding machine, remove the fiber optic laser cable (QBH) connector and oscillating mirror, and then measure the laser power of the laser device using an external power meter.

It is evident that the measurement method in these cases is cumbersome and less efficient.

### SUMMARY

In view of the above problems, this application provides a laser power detection system, a welding system, and an inspection method for laser welded workpiece, so as to solve the problem of cumbersome and inefficient measurement method described in the background.

According to a first aspect, this application provides a laser power detection system. The laser power detection system includes a light guide portion, an oscillating mirror, and a power detection apparatus, where the light guide portion is configured to guide a laser emitted by a laser device to the oscillating mirror and the power detection apparatus; and
the power detection apparatus includes a photoelectric conversion component and a computing component, where the photoelectric conversion component is configured to detect an electrical signal corresponding to the laser, and the computing component is configured to determine a laser power of the laser based on the electrical signal and a preset conversion relationship.

In the technical solution of embodiments of this application, the laser emitted by the laser device is guided to the oscillating mirror and the power detection apparatus by the light guide portion. This allows the oscillating mirror to output a laser for performing laser welding operations on a welding object. This also allows the power detection apparatus to detect, through the photoelectric conversion component, an electrical signal corresponding to the laser emitted by the laser device, and to determine, through the computing component based on the electrical signal and the preset conversion relationship, the laser power corresponding to the laser emitted by the laser device. It is evident that in the embodiments of this application, the power detection apparatus is disposed on an optical conduction path between the laser device and the oscillating mirror, so that the laser power of the laser device can be detected in real time during the operation of the laser welding machine without removing the QBH connector and the oscillating mirror. Therefore, the measurement method of the laser power detection system in the embodiments of this application is simple and efficient.

In some embodiments, the light guide portion includes a beam splitter, and the beam splitter is configured to guide at least a portion of the laser to the photoelectric conversion component and the oscillating mirror. This allows the oscillating mirror to output the laser for performing laser welding operations on a welding object, and the power detection apparatus to perform laser power detection in real time.

In some embodiments, the light guide portion includes an adjustable reflector, and the adjustable reflector is configured to switch at least a portion of the laser between the photoelectric conversion component and the oscillating mirror by adjusting an angle of a reflective surface with respect to an optical axis of the laser. This allows the oscillating mirror to output the laser for performing laser welding operations on a welding object, and the power detection apparatus to perform laser power detection in real time.

In some embodiments, the beam splitter is configured to split an incident laser projected at the beam splitter into a reflected beam directed to the oscillating mirror and a transmitted beam of the photoelectric conversion component, where an included angle between an optical axis of the reflected beam and an optical axis of the transmitted beam is greater than or equal to a preset angle, and a transmittance of the beam splitter is lower than a preset transmittance; and
the light guide portion further includes a sampling lens, where the sampling lens is located between the beam splitter and the photoelectric conversion component, and the sampling lens is configured to focus the transmitted beam onto the photoelectric conversion component.

In the technical solution of the embodiments of this application, a portion of the incident laser projected at the beam splitter can be reflected and guided to the oscillating mirror by the beam splitter, facilitating a welding operation on the welding object. In addition, another portion of the incident laser projected at the beam splitter can be transmitted and guided to the photoelectric conversion component in the power detection apparatus, allowing the photoelectric conversion component to detect the electrical signal corresponding to the laser emitted by the laser device. The included angle between the optical axis of the reflected beam reflected and guided to the oscillating mirror and the optical axis of the transmitted beam transmitted and guided to the power detection apparatus is greater than or equal to the preset angle. This allows for a greater distance between the installation positions of the oscillating mirror and the power detection apparatus, thereby preventing the stability of the power detection apparatus from being affected by the high-energy laser at the oscillating mirror. Additionally, the transmittance of the beam splitter can be lower than the preset transmittance to reduce the cost of the beam splitter, thereby reducing the cost of the laser power detection system.

In some embodiments, the light guide portion further includes a spatial filter, where the spatial filter is located between the sampling lens and the photoelectric conversion component, and the spatial filter is configured to filter the transmitted beam focused by the sampling lens onto the photoelectric conversion component to filter out stray light therefrom. This not only improves the transmission efficiency of the transmitted beam but also enhances the accuracy of the photoelectric conversion component in detecting the electrical signal corresponding to the laser emitted by the laser device. Additionally, the spatial filter can perform homogenization and attenuation processing on the transmitted beam, helping to improve the conversion efficiency of the photoelectric conversion component in converting the laser guided to the photoelectric conversion component into an electrical signal.

In some embodiments, the light guide portion further includes a collimating mirror, where the collimating mirror is configured to converge at least a portion of the laser emitted by the laser device onto the beam splitter. This facilitates more efficient transmission of the laser emitted by the laser device to the power detection apparatus and the oscillating mirror.

In some embodiments, the power detection apparatus further includes a communication component, where the communication component is configured to transmit a signal characterizing the laser power to a terminal device connected to the laser power detection system.

According to a second aspect, this application provides a laser welding system including: a laser device, a terminal device, and the laser power detection system described in any embodiment of the first aspect.

The terminal device is configured to receive a signal characterizing the laser power transmitted by the power detection apparatus in the laser power detection system, and record the laser power and identification information of a corresponding welded workpiece, so that an operator can query information such as the welded workpieces corresponding to different laser powers, facilitating the inspection of laser welded workpieces, such as locating problematic welded workpieces.

In some embodiments, the terminal device is configured to output image alarm information and/or sound alarm information when it is detected that the laser power is less than a first preset threshold or greater than a second preset threshold, so that the operator can adjust the laser power emitted by the laser in a timely manner, helping to improve the welding efficiency of the welded workpiece.

According to a third aspect, this application provides an inspection method for laser welded workpiece, where the method is used in the laser welding system described in any embodiment of the second aspect. The inspection method includes:
obtaining first identification information of at least one problematic welded workpiece; and
determining a first laser power corresponding to each problematic welded workpiece based on the first identification information of each problematic welded workpiece and a preset correspondence between laser powers and identification information of welded workpieces.

In the technical solution of the embodiments of this application, the first identification information of at least one problematic welded workpiece is obtained, and then the first laser power corresponding to each problematic welded workpiece is determined based on the first identification information of each problematic welded workpiece and the preset correspondence between laser powers and identification information of welded workpieces, thereby realizing the tracing of the laser power for welding the problematic welded workpiece.

In some embodiments, the method further includes:
determining a target laser power range based on the first laser power corresponding to each problematic welded workpiece; and
determining second identification information of at least one candidate problematic welded workpiece based on the target laser power range and the preset correspondence between laser powers and identification information of welded workpieces, thereby locating the candidate problematic welded workpiece.

In some embodiments, the method further includes:
obtaining a second laser power corresponding to each welded workpiece and corresponding identification information, where the second laser power corresponding to the welded workpiece is a laser power at which the welded workpiece is welded using the laser guided to the oscillating mirror; and
obtaining the preset correspondence between laser powers and identification information of welded workpieces based on the second laser power corresponding to each welded workpiece and the corresponding identification information, facilitating the tracing of the laser power for welding the problematic welded workpiece.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, in all of the accompanying drawings, the same parts are indicated by the same accompanying reference signs. In the accompanying drawings:
FIG. 1 is a schematic structural diagram of a laser power detection system according to some embodiments of this application;
FIG. 2 is a schematic diagram of a laser power curve before filtering processing according to an embodiment of this application;
FIG. 3 is a schematic diagram of a laser power curve after filtering processing according to an embodiment of this application;
FIG. 4 is a schematic structural diagram of a laser power detection system according to some other embodiments of this application;
FIG. 5 is a schematic structural diagram of a laser power detection system according to some other embodiments of this application;
FIG. 6 is a schematic structural diagram of a laser power detection system according to some other embodiments of this application;
FIG. 7 shows a schematic diagram of optical path transmission according to an embodiment of this application;
FIG. 8 is a schematic structural diagram of a laser power detection system according to some other embodiments of this application;
FIG. 9 is a first schematic structural diagram of a laser welding system according to some embodiments of this application;
FIG. 10 is a second schematic structural diagram of a laser welding system according to some embodiments of this application;
FIG. 11 is a schematic flowchart of an inspection method for laser welded workpiece according to some embodiments of this application;
FIG. 12 is a schematic structural diagram of an inspection apparatus of laser welded workpiece according to an embodiment of this application; and
FIG. 13 is a schematic structural diagram of a terminal device according to an embodiment of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The term "include" and any other variations thereof in the specification, claims and brief description of drawings of this application are intended to cover non-exclusive inclusions.

With the development of laser welding technology, laser welding technology has been widely used in a variety of industries such as manufacturing, powder metallurgy, automotive industry, electronics industry, and biomedicine. In the welding process, the laser power of the laser device in the laser welding machine is one of the critical parameters. Therefore, detection of the laser power of the laser device is important.

In the related technology, the laser welding machine includes a laser device and an oscillating mirror, where the laser and the oscillating mirror are connected to each other via a QBH connector. In some cases, in measuring the laser power of the laser device in the laser welding machine, it is typically necessary to stop the laser welding machine, remove the fiber optic laser cable (QBH) connector and oscillating mirror, and then measure the laser power of the laser device using an external power meter. It is evident that the measurement method in these cases is cumbersome, less efficient, and cannot detect the laser power of the laser in real time.

To solve the problem that the measurement method in these cases is cumbersome, less efficient, and cannot detect the laser power of the laser in real time, the applicant has found that a power detection apparatus can be disposed in the optical conduction path between the laser device and oscillating mirror in the laser welding machine, so as to detect in real time the laser power corresponding to the laser emitted by the laser device by using the power detection apparatus.

Based on the above considerations, the applicant, through research, has proposed a laser power detection system, a welding system, and an inspection method for laser welded workpieces. The laser emitted by a laser device is guided to an oscillating mirror and a power detection apparatus by a light guide portion. This allows the oscillating mirror to output a laser for performing laser welding operations on a welding object. This also allows the power detection apparatus to detect, through a photoelectric conversion component, an electrical signal corresponding to the laser emitted by the laser device, and to determine, through a computing component based on the electrical signal and a preset conversion relationship, a laser power corresponding to the laser emitted by the laser device. It is evident that in the embodiments of this application, the power detection apparatus is disposed on an optical conduction path between the laser device and the oscillating mirror, so that the laser power of the laser device can be detected in real time during the operation of the laser welding machine without removing the QBH connector and the oscillating mirror. Therefore, the measurement method of the laser power detection system in the embodiments of this application is simple and efficient.

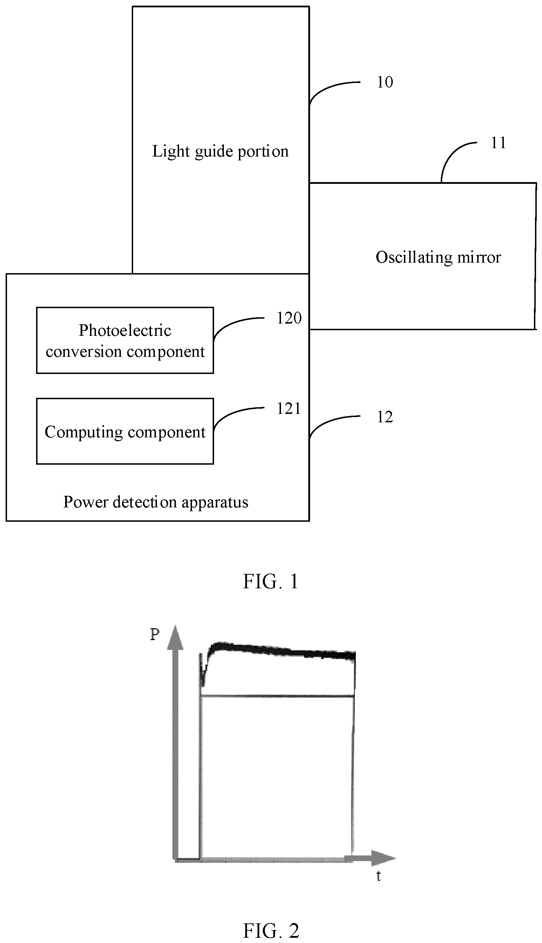

In some embodiments, FIG. 1 is a schematic structural diagram of a laser power detection system according to some embodiments of this application. As shown in FIG. 1, the laser power detection system of the embodiments of this application may include but is not limited to a light guide portion 10, an oscillating mirror 11, and a power detection apparatus 12. A first end of the light guide portion 10 may be connected to the laser device (not shown) via a QBH connector (not shown), and a second end of the light guide portion 10 may be connected to the oscillating mirror 11 and the power detection apparatus 12, that is, the power detection apparatus 12 is disposed on the optical conduction path between the laser device and the oscillating mirror 11 so that the power detection apparatus 12 can perform laser power detection in real time.

In an embodiment of this application, the light guide portion 10 is configured to guide the laser emitted by the laser device to the oscillating mirror 11 and the power detection apparatus 12. In an embodiment, the laser device in the embodiments of this application may include but is not limited to a fiber laser device.

For example, the light guide portion 10 can guide a portion of the laser emitted by the laser device to the oscillating mirror 11, allowing the oscillating mirror 11 to output the laser for performing laser welding operations on a welding object. Additionally, the light guide portion 10 can guide another portion of the laser to the power detection apparatus 12, allowing the power detection apparatus 12 to perform laser power detection in real time.

It should be understood that to ensure the welding efficiency of the laser welding machine, the light guide portion 10 in the embodiments of this application may guide a small portion (for example, 0.3%-0.5%) of the laser emitted by the laser device to the power detection apparatus for laser power detection, and transmit a large portion (for example, 99.5%-99.7%) of the laser emitted by the laser device to the oscillating mirror for laser welding.

The power detection apparatus 12 in the embodiments of this application may include a photoelectric conversion component 120 and a computing component 121. The photoelectric conversion component is configured to detect an electrical signal corresponding to the laser emitted by the laser device, and the computing component is configured to determine a laser power corresponding to the laser emitted by the laser device (hereinafter referred to as the laser power of the laser device) based on the electrical signal and a preset conversion relationship.

In a possible implementation, the photoelectric conversion component 120 in the embodiments of this application may include a photodiode and a sensor connected to the photodiode. For example, the photodiode in the embodiments of this application is configured to convert the incident laser of the photodiode into an electrical signal; and the sensor is configured to collect the electrical signal converted by the photodiode and send it to the computing component 121 so that the computing component 121 can detect the laser power of the laser device based on the electrical signal sent by the sensor. For example, the electrical signal in the embodiments of this application may include: a voltage signal and a current signal.

For example, the sensor in the embodiments of this application may include but is not limited to a voltage sensor and a current sensor. For another example, the sensor may include but is not limited to a sensor having voltage detection and current detection.

In another possible implementation, if the computing component 121 has a data collection function, the photoelectric conversion component 120 in the embodiments of this application may include a photodiode. For example, the photodiode in the embodiments of this application is configured to convert the incident laser of the photodiode into an electrical signal; and the computing component 121 is configured to collect the electrical signal converted by the photodiode and detect the laser power of the laser device based on the collected electrical signal.

In the following embodiments of this application, the content of "the computing component determines the laser power of the laser device based on the electrical signal and a preset conversion relationship" is described.

In a possible implementation, the computing component may determine a laser power corresponding to the received electrical signal as the laser power of the laser device based on the preset conversion relationship.

In an embodiment of this application, the preset conversion relationship is pre-stored in the computing component. The preset conversion relationship is used to indicate a correspondence between different electrical signals and corresponding laser powers. For example, the preset conversion relationship is used to indicate a correspondence between electrical signal 1 and corresponding laser power 1, a correspondence between electrical signal 2 and corresponding laser power 2, and a correspondence between electrical signal 3 and corresponding laser power 3.

For example, assuming that the received electrical signal is electrical signal 2, the computing component may determine laser power 2 corresponding to electrical signal 2 as the laser power of the laser device based on the preset conversion relationship.

In another possible implementation, the computing component may perform data processing on the received electrical signal to obtain the processed electrical signal; further, the computing component determines the laser power corresponding to the processed electrical signal as the laser power of the laser device based on the preset conversion relationship.

For example, the data processing in the embodiments of this application may include but is not limited to analog-to-digital conversion processing and filtering processing. It should be understood that the electrical signal in the embodiments of this application may include a current signal and a voltage signal, and the computing component may separately perform data processing on the current signal and voltage signal in the received electrical signal to obtain the processed electrical signal, where the processed electrical signal may include the processed current signal and the processed voltage signal.

It should be noted that the filtering processing performed by the computing component can not only reduce the amount of data, but also reduce noise interference, making the filtered electrical signal more stable. For example, assuming that the frequency of the electrical signal outputted by the photoelectric conversion component is 100 kHz, the frequency of the electrical signal filtered by the computing component can be reduced to 0.5 kHz to 2 kHz.

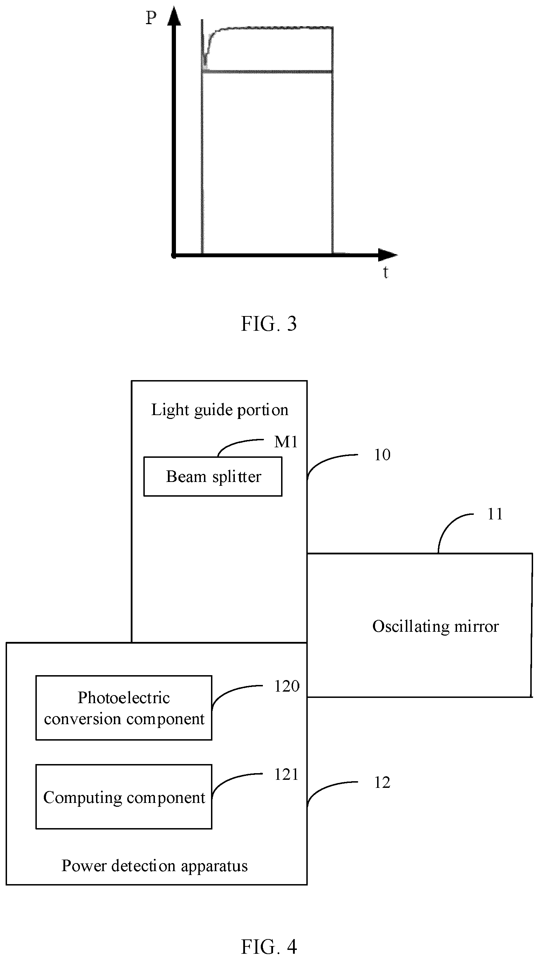

FIG. 2 is a schematic diagram of a laser power curve before filtering processing according to an embodiment of this application, and FIG. 3 is a schematic diagram of a laser power curve after filtering processing according to an embodiment of this application. As shown in FIG. 2 and FIG. 3, the laser power of the laser device detected by the computing component based on the filtered electrical signal can be more stable and more accurate.

For example, assuming that the processed electrical signal is electrical signal 3, the computing component may determine laser power 3 corresponding to electrical signal 3 as the laser power of the laser device based on the preset conversion relationship.

Certainly, the computing component may determine the laser power of the laser in other ways based on the electrical signal and the preset conversion relationship.

It should be noted that the computing component in the embodiments of this application may be disposed in the power detection apparatus, or may be disposed in a terminal device connected to the power detection apparatus so as to quickly detect the laser power of the laser device by utilizing the processing capability of the terminal device.

It should be understood that the power detection apparatus in the embodiments of this application may detect the laser power of the laser device in real time, detect the laser power of the laser device at preset intervals, or detect the laser power of the laser device when a detection instruction is received. Certainly, the power detection apparatus may also detect the laser power of the laser device in other circumstances, which are not limited in the embodiments of this application.

For example, if the power detection apparatus detects the laser power of the laser at preset intervals, the detection frequency at which the power detection apparatus detects the laser power of the laser may be greater than or equal to 2 MHz.

For example, the detection instruction in the embodiments of this application may be an instruction received by the power detection apparatus from the terminal device. For another example, the detection instruction in the embodiments of this application may be an instruction sent to the power detection apparatus by an operator by pressing a detection button in the power detection apparatus. For another example, the detection instruction in the embodiments of this application may be an instruction received by the power detection apparatus from an operator by voice input. Certainly, the detection instruction in the embodiments of this application may alternatively be an instruction received by the power detection apparatus by other means, which is not limited in the embodiments of this application.

In the foregoing laser power detection system, the laser emitted by the laser device is guided to the oscillating mirror and the power detection apparatus by the light guide portion. This allows the oscillating mirror to output a laser for performing laser welding operations on a welding object. This also allows the power detection apparatus to detect, through the photoelectric conversion component, an electrical signal corresponding to the laser emitted by the laser device, and to determine, through the computing component based on the electrical signal and the preset conversion relationship, the laser power corresponding to the laser emitted by the laser device. It is evident that in the embodiments of this application, the power detection apparatus is disposed on an optical conduction path between the laser device and the oscillating mirror, so that the laser power of the laser device can be detected in real time during the operation of the laser welding machine without removing the QBH connector and the oscillating mirror. Therefore, the measurement method of the laser power detection system in the embodiments of this application is simple and efficient.

In some embodiments, based on the above embodiments, the light guide portion is described in the following embodiments of this application.

FIG. 4 is a schematic structural diagram of a laser power detection system according to some other embodiments of this application. As shown in FIG. 4, the light guide portion 10 in the embodiments of this application may include a beam splitter M1. The beam splitter M1 is configured to guide at least a portion of the laser to the photoelectric conversion component 120 and the oscillating mirror 11. This allows the oscillating mirror 11 to output the laser for performing laser welding operations on a welding object, and the power detection apparatus 12 to perform laser power detection in real time.

In an embodiment, the beam splitter M1 is configured to split incident laser emitted by the laser device and projected to the beam splitter M1 into a reflected beam directed to the oscillating mirror 11 and a transmitted beam of the photoelectric conversion component.

For example, on one hand, the beam splitter M1 can reflect a portion of the incident laser projected at the beam splitter M1 to the oscillating mirror 11, facilitating a welding operation on the welding object. On the other hand, the beam splitter M1 can transmit another portion of the incident laser projected at the beam splitter M1 to the photoelectric conversion component 120 in the power detection apparatus 12, allowing the photoelectric conversion component 120 to detect the electrical signal corresponding to the laser emitted by the laser device.

For example, an included angle between an optical axis of the reflected beam reflected to the oscillating mirror 11 and an optical axis of the transmitted beam transmitted to the power detection apparatus 12 is greater than or equal to a preset angle (for example, 90 degrees). This allows for a greater distance between the installation positions of the oscillating mirror 11 and the power detection apparatus 12, thereby preventing the stability of the power detection apparatus 12 from being affected by the high-energy laser at the oscillating mirror 11.

For another example, a transmittance of the beam splitter M1 can be lower than a preset transmittance (for example, 5%) to reduce the cost of the beam splitter, thereby reducing the cost of the laser power detection system.

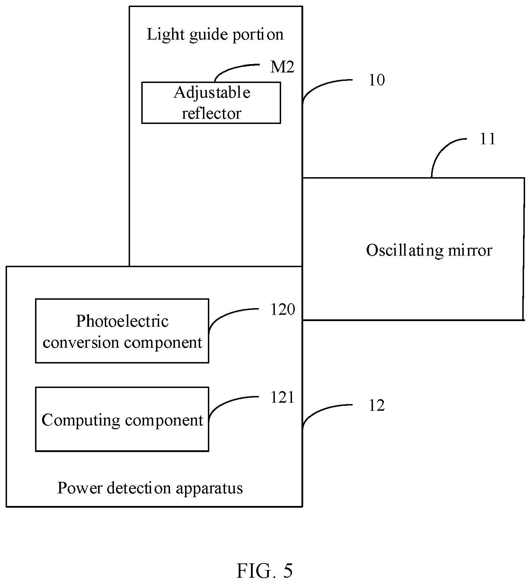

FIG. 5 is a schematic structural diagram of a laser power detection system according to some other embodiments of this application. As shown in FIG. 5, the light guide portion 10 in the embodiments of this application may include an adjustable reflector M2. The adjustable reflector M2 is configured to switch at least a portion of the incident laser between the photoelectric conversion component 120 and the oscillating mirror 11 by adjusting an optical axis angle of a reflective surface of the adjustable reflector M2 with respect to the incident laser emitted by the laser device and projected onto the adjustable reflector M2. This allows the oscillating mirror 11 to output the laser for performing laser welding operations on a welding object, and the power detection apparatus 12 to perform laser power detection in real time.

For example, by adjusting the optical axis angle of the reflective surface of the adjustable reflector M2 with respect to the incident laser emitted by the laser device and projected onto the adjustable reflector M2 to a first preset optical axis angle, the adjustable reflector M2 can transmit a portion of the incident laser to the oscillating mirror 11. This allows the oscillating mirror 11 to output the laser for performing laser welding operations on a welding object.

For another example, by adjusting the optical axis angle of the reflective surface of the adjustable reflector M2 with respect to the incident laser emitted by the laser device and projected onto the adjustable reflector M2 to a second preset optical axis angle, the adjustable reflector M2 can transmit a portion of the incident laser to the photoelectric conversion component 120. This allows the power detection apparatus 12 to detect the laser power in real time.

It should be understood that the adjustable reflector M2 can periodically and quickly adjust the optical axis angle of the reflective surface with respect to the incident laser emitted by the laser device and projected onto the adjustable reflector M2, so that at least a portion of the incident laser can be switched between the photoelectric conversion component 120 and the oscillating mirror 11.

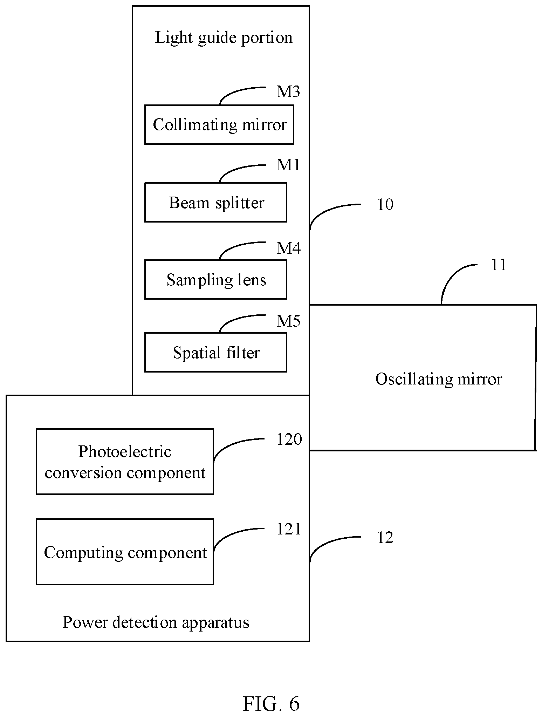

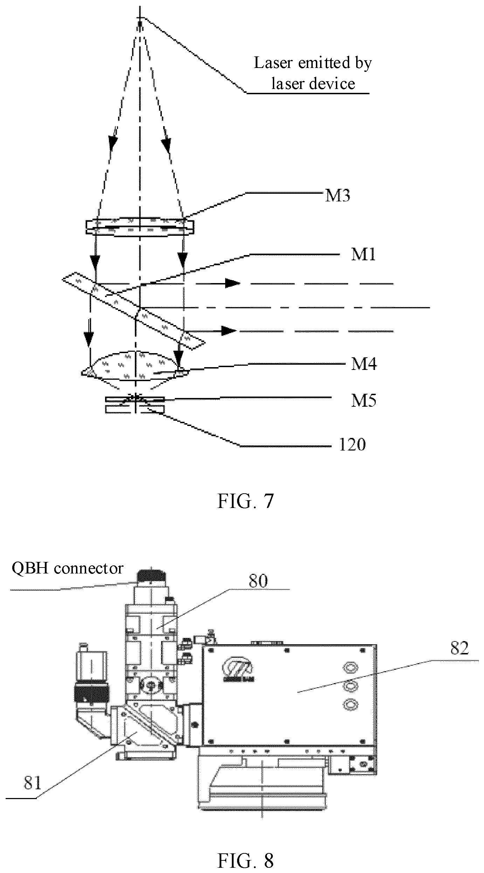

FIG. 6 is a schematic structural diagram of a laser power detection system according to some other embodiments of this application, and FIG. 7 is a schematic diagram of optical path transmission according to an embodiment of this application. As shown in FIG. 6 and FIG. 7, the light guide portion 10 in the embodiments of this application may include a collimating mirror M3, a beam splitter M1, and a sampling lens M4. The collimating mirror M3 is located between the laser device and the beam splitter M1, and the sampling lens M4 is located between the beam splitter M1 and the photoelectric conversion component 120 of the power detection apparatus 12.

The collimating mirror M3 is configured to converge at least a portion of the laser emitted by the laser device onto the beam splitter M1 after collimation processing. This facilitates more efficient transmission of the laser emitted by the laser device to the power detection apparatus 12 and the oscillating mirror 11.

The beam splitter M1 is configured to split the incident laser projected to the beam splitter M1 into a reflected beam directed to the oscillating mirror 11 and a transmitted beam directed to the sampling lens M4.

For example, the sampling lens M4 in the embodiments of this application may be a non-imaging optical lens, which may be a convex lens for focusing the laser guided to the sampling lens M4. The sampling lens M4 in the embodiments of this application may be configured to focus the transmitted beam from the beam splitter M1 onto the photoelectric conversion component 120, so that the photoelectric conversion component 120 detects an electrical signal corresponding to the laser emitted by the laser device, allowing the computing component 121 to determine a laser power of the laser device based on that electrical signal and the preset conversion relationship.

Further, the light guide portion may further include a spatial filter M5 located between the sampling lens M4 and the photoelectric conversion component 120. The spatial filter M5 is configured to filter the transmitted beam focused by the sampling lens M4 onto the photoelectric conversion component 120 to filter out stray light therefrom. This not only improves the transmission efficiency of the transmitted beam, but also enhances the accuracy of the photoelectric conversion component 120 in detecting the electrical signal corresponding to the laser emitted by the laser device.

It should be noted that the spatial filter M5 can perform homogenization and attenuation processing on the transmitted beam, which is conducive to improving the conversion efficiency of the photoelectric conversion component 120 in converting the laser guided to the photoelectric conversion component 120 into an electrical signal.

It should be noted that the beam splitter M1, the sampling lens M4, the spatial filter M5, and the photoelectric conversion component 120 in the power detection apparatus 12 may be provided in a power detection device. The computing component 121 in the power detection apparatus 12 may be provided in the power detection device or the terminal device.

FIG. 8 is a schematic structural diagram of a laser power detection system according to some other embodiments of this application. As shown in FIG. 8, the laser power detection system may include but is not limited to: a light guide portion 80 containing a collimating mirror, a power detection device 81, and an oscillating mirror 82. It should be understood that the light guide portion 80 may also include other devices, which are not limited in the embodiments of this application. It should be noted that the top of the light guide portion 80 may be connected to a laser device via a QBH connector.

Further, the power detection apparatus in the embodiments of this application may further include a communication component. The communication component is configured to transmit a signal characterizing a laser power of the laser device detected by the power detection apparatus to a terminal device connected to the laser power detection system, so that the terminal device performs corresponding processing, such as record keeping or early warning detection, based on the laser power of the laser device detected by the power detection apparatus.

For example, the communication component may be a wired communication component or a wireless communication component, allowing the power detection apparatus to transmit a signal of the detected laser power to the terminal device by a wired or wireless means. For example, the wireless means described above may be realized through Wi-Fi, mobile cellular network, NFC (near field communication), or other technologies.

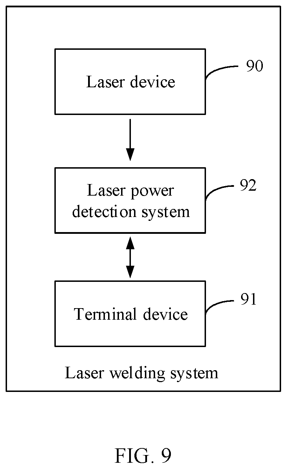

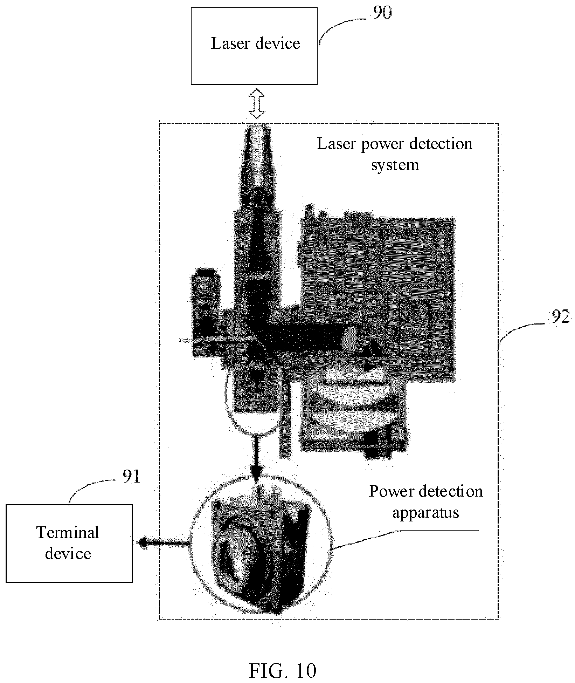

In some embodiments, based on the above embodiments, the power detection system is described in the embodiments of this application. FIG. 9 is a first schematic structural diagram of a laser welding system according to some embodiments of this application, and FIG. 10 is a second schematic structural diagram of a laser welding system according to some embodiments of this application. As shown in FIG. 9 and FIG. 10, the laser detection system in the embodiments of this application may include: a laser device 90, a terminal device 91, and the laser power detection system 92 according to any of the foregoing embodiments.

The terminal device 91 in the embodiments of this application is configured to receive a signal of the laser power transmitted by the power detection apparatus in the laser power detection system 92, and record the laser power and identification information of a corresponding welded workpiece. The signal of the laser power transmitted by the power detection apparatus is used to indicate the laser power corresponding to the laser emitted by the laser device detected by the power detection apparatus (hereinafter referred to as the laser power of the laser device) as well as corresponding detection time, and identification information of any welded workpiece is used to uniquely identify the welded workpiece.

For example, the terminal device 91 may record the laser power sent by the power detection apparatus each time and the corresponding detection time, so that a laser power curve of the laser device can be generated and displayed (as shown in FIG. 3), allowing an operator to view the laser power changes of the laser device. In addition, by recording the laser power of the laser device detected each time and the corresponding detection time, the terminal device 91 can also intelligently assess the stability of the laser power output by the laser device, to facilitate fault diagnosis and fault prediction, thereby helping to improve the welding efficiency of the laser welding system.

To facilitate subsequent product traceability, the terminal device 91 in the embodiments of this application may further record identification information of a welded workpiece corresponding to each laser power, so that an operator can query information such as the welded workpieces corresponding to different laser powers, facilitating the inspection of laser welded workpieces, such as locating problematic welded workpieces.

It should be understood that if the computing component in the foregoing power detection apparatus is provided in the terminal device 91, the terminal device 91 may determine the laser power of the laser device based on the electrical signal corresponding to the laser emitted by the laser device detected by the photoelectric conversion component 120 in the foregoing power detection apparatus and the preset conversion relationship. It should be noted that for the manner in which the terminal device 91 determines the laser power of the laser based on the electrical signal and the preset conversion relationship, reference can be made to the relevant content in the above embodiments regarding the computing component determining the laser power of the laser device based on the electrical signal and the preset conversion relationship, and details are not described herein.

Further, the terminal device 91 may be further configured to output image alarm information and/or sound alarm information when it is detected that the laser power of the laser device is less than a first preset threshold or greater than a second preset threshold, so that the operator can adjust the laser power emitted by the laser in a timely manner, helping to improve the welding efficiency of the welded workpiece. For example, the image alarm information may include but is not limited to text alarm information and/or icon alarm information.

For example, as shown in FIG. 3, the terminal device 91 send image alarm information and/or sound alarm information when it detects that the laser power of the laser device is lower than a preset threshold lower limit shown in FIG. 3.

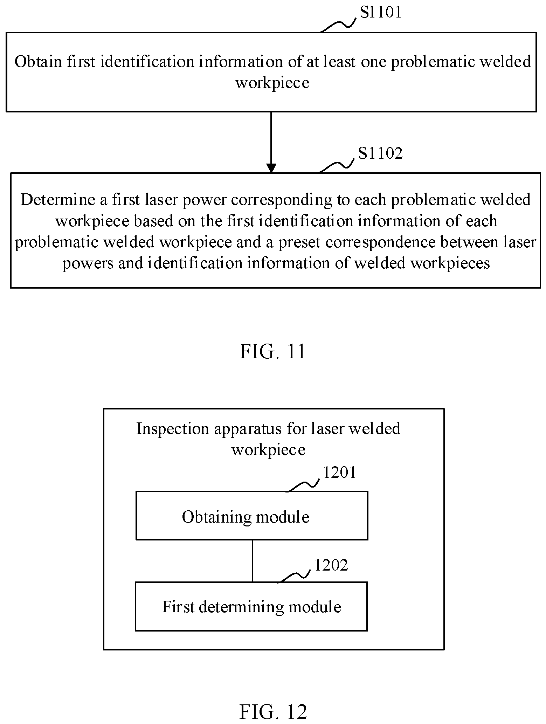

In some embodiments, based on the above embodiments, the inspection method for laser welded workpiece is described in the embodiments of this application. The inspection method for laser welded workpiece in the embodiments of this application can be applied to the terminal device in the laser welding system provided in the above embodiments. FIG. 11 is a schematic flowchart of an inspection method for laser welded workpiece according to some embodiments of this application. As shown in FIG. 11, the method of the embodiments of this application may include the following steps.

Step S1101. Obtain first identification information of at least one problematic welded workpiece.

For example, a terminal device may obtain first identification information of at least one problematic welded workpiece input by an operator via an input apparatus of the terminal device, where the input apparatus may include but is not limited to a keypad and/or a touchscreen.

For another example, the terminal device may obtain first identification information of at least one problematic welded workpiece sent by another electronic device.

Certainly, in this step, the terminal device may alternatively obtain the first identification information of the at least one problem welded workpiece in other ways, which is not limited in the embodiments of this application.

Step S1102. Determine a first laser power corresponding to each problematic welded workpiece based on the first identification information of each problematic welded workpiece and a preset correspondence between laser powers and identification information of welded workpieces.

In the embodiments of this application, the preset correspondence between laser powers and identification information of welded workpieces may be set in the terminal device. The preset correspondence between laser powers and identification information of welded workpieces is used to indicate a correspondence between laser powers of different laser devices and identification information of corresponding welded workpieces. For example, the preset correspondence between laser powers and identification information of welded workpieces is used to indicate correspondences between laser power 1 and identification information A1, identification information A2, and identification information A3 of a corresponding welded workpiece, correspondences between laser power 2 and identification information B 1 and identification information B2 of a corresponding welded workpiece, and a correspondence between laser power 3 and identification information C 1 of a corresponding welded workpiece.

In this step, for the first identification information of each problematic welded workpiece, the terminal device may determine the laser power corresponding to the first identification information of the problematic welded workpiece as a first laser power corresponding to the problematic welded workpiece based on the preset correspondence between laser powers and identification information of welded workpieces, thereby achieving traceability of the laser power for welding the problematic welded workpiece.

For example, assuming that first identification information of any problematic welded workpiece is identification information B1 of the welded workpiece, the terminal device may determine laser power 2 corresponding to the identification information B1 of the problematic welded workpiece as a first laser power corresponding to the problematic welded workpiece based on the preset correspondence between laser powers and identification information of welded workpieces.

In the foregoing inspection method for laser welded workpiece, the first identification information of at least one problematic welded workpiece is obtained, and then the first laser power corresponding to each problematic welded workpiece is determined based on the first identification information of each problematic welded workpiece and the preset correspondence between laser powers and identification information of welded workpieces, thereby achieving traceability of the laser power for welding the problematic welded workpiece.

Further, the terminal device may further determine a target laser power range based on the first laser power corresponding to each problematic welded workpiece, and determine second identification information of at least one candidate problematic welded workpiece based on the target laser power range and the preset correspondence between laser powers and identification information of welded workpieces.

In the embodiments of this application, the terminal device may further determine, based on the first laser power corresponding to each problematic welded workpieces, a target laser power range that can include the first laser power corresponding to each problematic welded workpiece.

For example, the terminal device may use an average laser power of the first laser powers corresponding to all problematic welded workpieces as a center power of the target laser power range, and the target laser power range may include the first laser powers corresponding to all the problematic welded workpieces.

For another example, the terminal device may use a maximum laser power in the first laser powers corresponding to all problematic welded workpieces as an upper limit value of the target laser power range, and a minimum laser power in the first laser powers corresponding to all problematic welded workpiece as a lower limit value of the target laser power range.

Certainly, the terminal device may determine the target laser power range in other ways based on the first laser power corresponding to each problematic welded workpiece, which is not limited in the embodiments of this application.

Further, the terminal device may determine identification information of respective welded workpieces corresponding to target laser powers included in the target laser power range as second identification information of respective candidate problematic welded workpieces based the preset correspondence between laser powers and identification information of welded workpieces, thereby locating the candidate problematic welded workpieces.

For example, assuming that the target laser power range includes laser power 1 and laser power 2, the terminal device may determine identification information A1, identification information A2, and identification information A3 of a welded workpiece corresponding to laser power 1 and identification information B 1 and identification information B2 of a welded workpiece corresponding to laser power 2 as second identification information of the candidate problematic welded workpieces.

Based on the above embodiments, the following embodiment of this application describes a manner for obtaining the foregoing preset correspondence between laser powers and identification information of welded workpieces.

The terminal device may obtain a second laser power corresponding to each welded workpiece and corresponding identification information, and obtain the preset correspondence between laser powers and identification information of welded workpieces based on the second laser power corresponding to each welded workpiece and the corresponding identification information, facilitating the traceability of the laser power for welding the problematic welded workpiece.

For example, the second laser power corresponding to the welded workpiece is a laser power at which the welded workpiece is welded using the laser guided to the oscillating mirror.

It should be understood that the terminal device may receive the second laser power corresponding to each welded workpiece and corresponding identification information sent by the foregoing power detection apparatus or other devices, or may obtain the second laser power corresponding to each welded workpiece and the corresponding identification information in other ways. This is not limited in the embodiments of this application.

It should be understood that although the steps in the flowcharts involved in the above embodiments are shown sequentially as indicated by the arrows, these steps are not necessarily executed sequentially in the order indicated by the arrows. Unless expressly stated herein, there is no strict limitation on the execution order of these steps, and these steps may be executed in other orders. Furthermore, at least some of the steps in the flowcharts involved in the above embodiments may include a plurality of steps or a plurality of stages, and these steps or stages are not necessarily completed at the same moment but may be executed at different moments, and these steps or stages are not necessarily executed sequentially, but may be executed in turn or alternately with other steps or at least some of the steps or stages in other steps.

Based on the same inventive conception, an embodiment of this application further provides an inspection device for implementing the inspection method for laser welded workpiece described above. The solution provided in the apparatus is similar to the solution provided by the above method. Therefore, for specific limitations in the one or more embodiments of the inspection apparatus provided below, reference may be made to the limitations for the inspection method for laser welded workpiece described above, and details are not described herein.

In an embodiment, FIG. 12 is a schematic structural diagram of an inspection apparatus of laser welded workpiece according to an embodiment of this application, and the inspection apparatus for laser welded workpiece provided in the embodiments of this application can be used in a terminal device. As shown in FIG. 12, the inspection device for laser welded workpiece according to the embodiments of this application may include: an obtaining module 1201 and a first determining module 1202.

The obtaining module 1201 is configured to obtain first identification information of at least one problematic welded workpiece.

The determining module 1202 is configured to determine a first laser power corresponding to each problematic welded workpiece based on the first identification information of each problematic welded workpiece and a preset correspondence between laser powers and identification information of welded workpieces.

In an embodiment, the apparatus further includes:
a second determining module, configured to determine a target laser power range based on the first laser power corresponding to each problematic welded workpiece; and
a third determining module, configured to determine second identification information of at least one candidate problematic welded workpiece based on the target laser power range and the preset correspondence between laser powers and identification information of welded workpieces.

In an embodiment, the apparatus further includes:
a first obtaining module, configured to obtain a second laser power corresponding to each welded workpiece and corresponding identification information, where the second laser power corresponding to the welded workpiece is a laser power of the laser device at which the welded workpiece is welded using the laser guided to the oscillating mirror; and
a second obtaining module, configured to obtain the preset correspondence between laser powers and identification information of welded workpieces based on the second laser power corresponding to each welded workpiece and the corresponding identification information.

The inspection apparatus for laser welded workpiece provided in the embodiments of this application can be used to perform the technical solutions in the above embodiments of the inspection method for laser welded workpiece of this application, with similar implementation principle and technical effects. Details are not repeated herein.

Some or all of the modules in the foregoing inspection apparatus for laser welded workpiece may be implemented by software, hardware, or a combination thereof. The above modules may be embedded in or independent of the processor of the terminal device in the form of hardware, or may be stored in the memory of the terminal device in the form of software so as to facilitate invocation by the processor to perform the operations corresponding to the above modules.

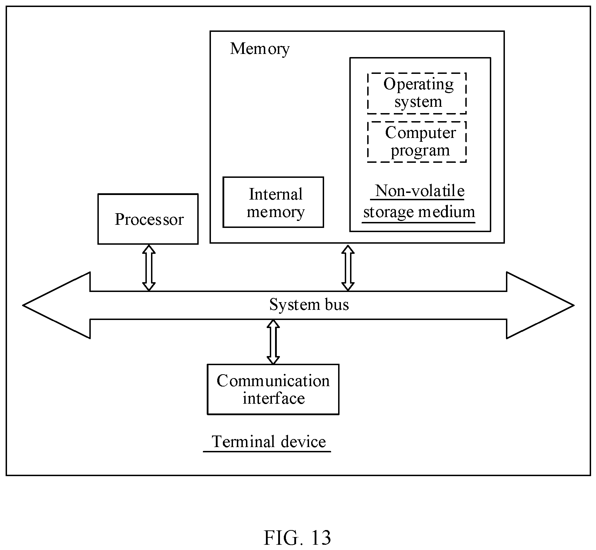

In an embodiment, FIG. 13 is a schematic structural diagram of a terminal device according to an embodiment of this application. As shown in FIG. 13, the terminal device provided in the embodiments of this application may include a processor, a memory, and a communication interface connected via a system bus. The processor of the terminal device is configured to provide computing and control capabilities. The memory of the terminal device includes a non-volatile storage medium and an internal memory. The non-volatile storage medium stores an operating system and a computer program. The internal memory provides an environment for running the operating system and computer program in the non-volatile storage medium. The communication interface of the terminal device is configured to communicate with an external device in a wired or wireless manner. When the computer program is executed by the processor, the technical solutions in the above embodiments of the inspection method for laser welded workpiece of this application are implemented, with similar implementation principles and technical effects. Details are not repeated herein.

For example, the terminal device may further include a display and an input apparatus. The display may be a liquid crystal display or an e-ink display. The input apparatus may be a touch layer covering the display, or may be a button, a trackball or a touch panel provided on the housing of the electronic device, or may be an external keyboard, a touch panel, a mouse, or the like.

A person skilled in the art can understand that the structure shown in FIG. 13 is only a block diagram of part of the structure related to the solution of this application, and does not constitute a limitation on the terminal device to which the solution of this application is applied. The specific terminal device may include more or fewer components than shown in the figure, or combine some of the components, or arrange the components differently.

In an embodiment, a terminal device is further provided, including a memory and a processor. The memory stores a computer program. When the computer program is executed by the processor, the technical solutions in the above embodiments of the inspection method for laser welded workpiece of this application are implemented, with similar implementation principles and technical effects. Details are not repeated herein.

In an embodiment, a computer-readable storage medium is provided, where the computer-readable storage medium stores a computer program. When the computer program is executed by the processor, the technical solutions in the above embodiments of the inspection method for laser welded workpiece of this application are implemented, with similar implementation principles and technical effects. Details are not repeated herein.

In an embodiment, a computer program product including a computer program is provided. When the computer program is executed by a processor, the technical solutions in the above embodiments of the inspection method for laser welded workpiece of this application are implemented, with similar implementation principles and technical effects. Details are not repeated herein.

A person of ordinary skill in the art can understand that all or part of the processes of the method in the embodiments may be implemented by a computer program instructing related hardware. The computer program may be stored in a non-volatile computer-readable storage medium, and when the computer program is executed, the processes in the foregoing method embodiments may be included. Any reference to a memory or other medium used in the embodiments of this application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, or the like. The volatile memory may include a random access memory (RAM), an external cache memory, or the like. For illustrative purpose other than limitation, the RAM may be in various forms, such as a static random access memory (SRAM) or a dynamic random access memory (DRAM). The processor involved in the embodiments of this application may be a general-purpose processor, a central processing unit, a graphic processing unit, a digital signal processor, a programmable logic device, a quantum computing-based data processing logic device, or the like, but is not limited thereto.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A laser power detection system, wherein the laser power detection system comprises a light guide portion, an oscillating mirror, and a power detection apparatus, wherein the light guide portion is configured to guide a laser emitted by a laser device to the oscillating mirror and the power detection apparatus; and
the power detection apparatus comprises a photoelectric conversion component and a computing component, wherein the photoelectric conversion component is configured to detect an electrical signal corresponding to the laser, and the computing component is configured to determine a laser power of the laser based on the electrical signal and a preset conversion relationship.

2. The laser power detection system according to claim 1, wherein the light guide portion comprises a beam splitter, wherein the beam splitter is configured to simultaneously guide at least a portion of the laser to the photoelectric conversion component and the oscillating mirror.

3. The laser power detection system according to claim 1, wherein the light guide portion comprises an adjustable reflector, wherein the adjustable reflector is configured to switch at least a portion of the laser between the photoelectric conversion component and the oscillating mirror by adjusting an angle of a reflective surface with respect to an optical axis of the laser.

4. The laser power detection system according to claim 2, wherein the beam splitter is configured to split an incident laser projected at the beam splitter into a reflected beam directed to the oscillating mirror and a transmitted beam of the photoelectric conversion component, wherein an included angle between an optical axis of the reflected beam and an optical axis of the transmitted beam is greater than or equal to a preset angle, and a transmittance of the beam splitter is lower than a preset transmittance; and
the light guide portion further comprises a sampling lens, wherein the sampling lens is located between the beam splitter and the photoelectric conversion component, and the sampling lens is configured to focus the transmitted beam onto the photoelectric conversion component.

5. The laser power detection system according to claim 4, wherein the light guide portion further comprises a spatial filter, wherein the spatial filter is located between the sampling lens and the photoelectric conversion component, and the spatial filter is configured to filter the transmitted beam focused by the sampling lens onto the photoelectric conversion component.

6. The laser power detection system according to claim 2, 4, or 5, wherein the light guide portion further comprises a collimating mirror, wherein the collimating mirror is configured to converge at least a portion of the laser emitted by the laser onto the beam splitter.

7. The laser power detection system according to claim 1, 2, 4, or 5, wherein the power detection apparatus further comprises a communication component, wherein the communication component is configured to transmit a signal characterizing the laser power to a terminal device connected to the laser power detection system.

8. A laser welding system, comprising: a laser device, a terminal device, and the laser power detection system according to any one of claims 1 to 7;
wherein the terminal device is configured to receive a signal characterizing the laser power transmitted by the power detection apparatus in the laser power detection system, and record the laser power and identification information of a corresponding welded workpiece.

9. The laser welding system according to claim 8, wherein the terminal device is configured to output image alarm information and/or sound alarm information when it is detected that the laser power is less than a first preset threshold or greater than a second preset threshold.

10. The laser welding system according to claim 8 or 9, wherein the terminal device is configured to record the laser power sent by the power detection apparatus each time and corresponding detection time.

11. An inspection method for laser welded workpiece, wherein the method is used in the laser welding system according to any one of claims 8 to 10, and the inspection method comprises:
obtaining first identification information of at least one problematic welded workpiece; and
determining a first laser power corresponding to each problematic welded workpiece based on the first identification information of each problematic welded workpiece and a preset correspondence between laser powers and identification information of welded workpieces.

12. The inspection method for laser welded workpiece according to claim 11, wherein the method further comprises:
determining a target laser power range based on the first laser power corresponding to each problematic welded workpiece; and
determining second identification information of at least one candidate problematic welded workpiece based on the target laser power range and the preset correspondence between laser powers and identification information of welded workpieces.

13. The inspection method for laser welded workpiece according to claim 11 or 12, wherein the method further comprises:
obtaining a second laser power corresponding to each welded workpiece and corresponding identification information, wherein the second laser power corresponding to the welded workpiece is a laser power at which the welded workpiece is welded using the laser guided to the oscillating mirror; and
obtaining the preset correspondence between laser powers and identification information of welded workpieces based on the second laser power corresponding to each welded workpiece and the corresponding identification information.

14. An inspection apparatus for laser welded workpiece, wherein the inspection apparatus comprises:
an obtaining module configured to obtain first identification information of at least one problematic welded workpiece; and
a determining module configured to determine a first laser power corresponding to each problematic welded workpiece based on the first identification information of each problematic welded workpiece and a preset correspondence between laser powers and identification information of welded workpieces.

15. A terminal device, comprising a memory and a processor, wherein the memory stores a computer program, and when the processor executes the computer program, the steps of the method according to any one of claims 11 to 13 are implemented.

16. A computer-readable storage medium, wherein the computer-readable storage medium stores a computer program, and when the computer program is executed by a processor, the steps of the method according to any one of claims 11 to 13 are implemented.

17. A computer program product comprising a computer program, wherein when the computer program is executed by a processor, the steps of the method according to any one of claims 11 to 13 are implemented.
